# EUROPEAN PATENT SPECIFICATION

(11) **EP 0 751 891 B1**
(45) Date of publication and mention of the grant of the patent: **07.01.1999**
(21) Application number: 95914638.2
(22) Date of filing: 23.03.1995
(51) Int. Cl.: B61B 10/02, B61B 13/12

(54) **DEVICE IN SUSPENDED CONVEYORS**
VORRICHTUNG BEI HÄNGEFÖRDERERN
DISPOSITIF INTEGRE A UN CONVOYEUR SUSPENDU

(30) Priority: 24.03.1994 SE 9400990
(43) Date of publication of application: 08.01.1997
(73) Proprietor: Christiansson, Carsten, 502 49 Boras (SE)
(72) Inventor: Christiansson, Carsten, 502 49 Boras (SE)
(74) Representative: Roth, Ernst Adolf Michael
(86) International application number: SE9500304
(87) International publication number: WO9525656

(56) References cited:
- WO-A-80/00559
- US-A- 4 875 416
- DERWENT'S ABSTRACT, No. 87-169058/24, week 8724; & SU,A,1 266 774 (TSAREV E M), 30 October 1986.

## Description

The invention refers to a suspended conveyor of the type incorporating at least one trolley movably arranged in an overhead beam system and having suspended load bearing means. The movable trolley in one embodiment is driven by a threaded spindle, which extends in the direction of travel and is adapted to cooperate with a driven part of the trolley. Such a conveyor (WO 80/0059) provides a number of advantages, the most important of which might be that very little available floor space will have to be utilized for the conveyor.
A problem is however that such conveyor tracks can be arranged in one main direction, and branchings, curve portions, etcetera require often manual actuation, whereby the automation will suffer.

The purpose of the present invention is now to provide a device in suspended conveyors, by which automatic switching into side tracks, running in sharp curves and even disengagement of separate movable trolleys from propulsion can be obtained without problems, and this has been achieved by means of the features defined in the accompanying claims.

Hereinafter the invention will be further described with reference to an embodiment schematically shown in the accompanying drawings.
Fig. 1 shows in perspective a portion of the conveyor according to the invention.
Fig.s a-2c show cross sectional views of a beam forming part of the conveyor and a part of a trolley movable therein, shown in different positions along the transport track.
Fig. 3 shows the movable trolley in a side view.
Fig. 4 illustrates likewise from the side two movable trolleys interconnected to a transport unit.
Fig. 5 shows a portion of a spindle forming part of the conveyor according to the invention.
Fig. 6 shows a portion of the spindle forming part of the conveyor and having a movable section.
Fig. 7 illustrates in an end view a part of the convewyor beam system intended for switching from the main track of the conveyor and into a side track.
Fig. 8 is a schematic view from above and showing a track route with switching points and branched of track portions, and
Fig. 9 illustrates schematically the arrangement of a level change for the track of the suspended conveyor.

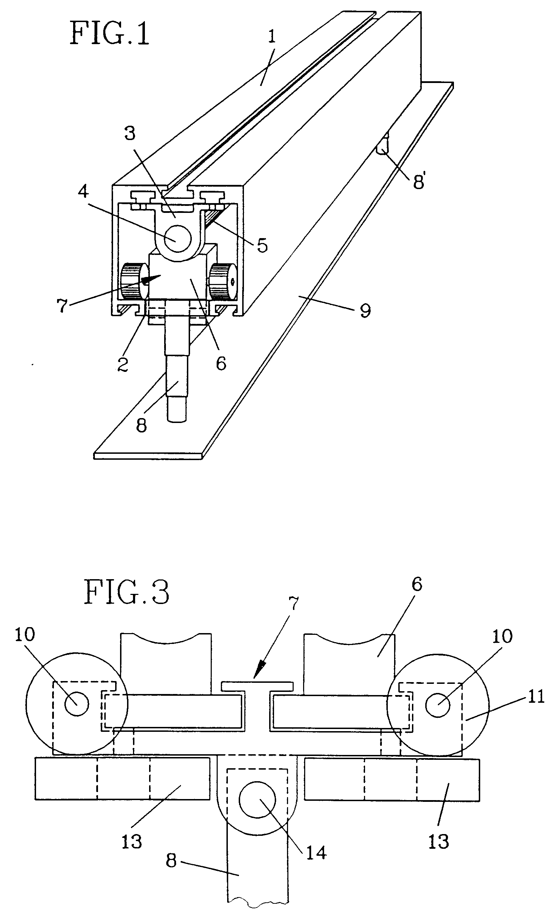

In Fig. 1 is schematically shown in a perspective view a section of the conveyor according to the invention. The conveyor incorporates an elongated beam 1, which is made as a hollow box beam with square cross section and with a longitudinal and centrally located slit-shaped opening 2 provided in the side facing downwards in mounted position. In the interior of the beam 1 are provided a number of drop hanger bearing brackets 3, which together, in a rotatable manner support a spindle 4, extending in the longitudinal direction of the beam. This spindle 4 is equipped with threaded portions 5, arranged at spindle rotation, to cooperate with a driving block 6 adapted to the thread of the spindle and fitted to a trolley 7 movable in the interior of and in the longitudinal direction of the beam. From the trolley 7 extends a depending arm 8, which projects through the slit-shaped opening 2, and which preferably together with a corresponding arm 8' on another movable trolley (not visible in the figure) supports a loading area 9 of appropriate type.

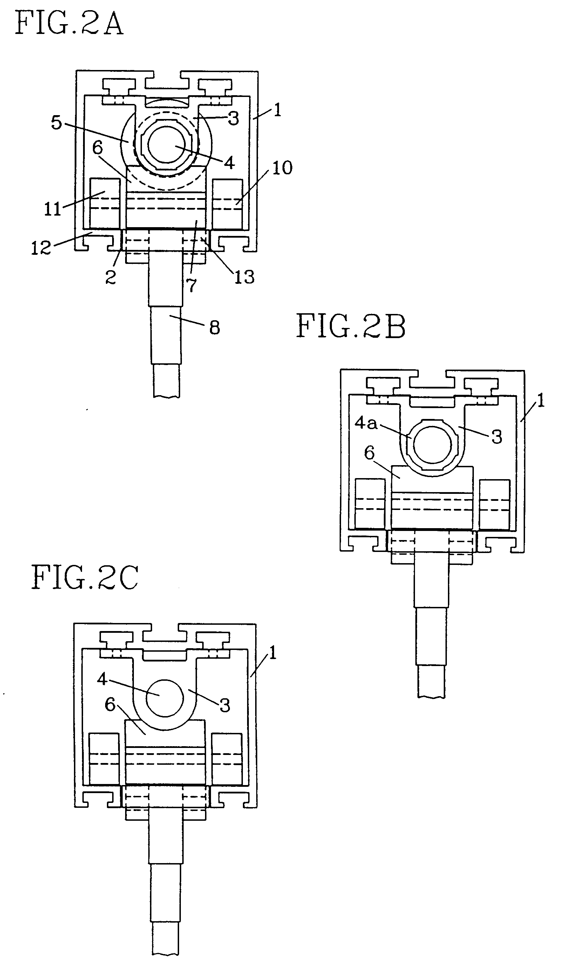

In Fig. 2a is shown in cross section the substantially square hollow beam 1 with its longitudinal slit-shaped opening 2 in its lower surface, and with a spindle 4 mounted to rotate in bearing brackets 3 in the interior of the beam, which spindle via a centre profile 4a supports threaded portions 5 by means of which the spindle 4 is in driving engagement with a driving block 6 on the trolley 7, which trolley is movable in the longitudinal direction of the beam, and carries a depending, load carrying arm 8 and is equipped with two transverse shafts 10 carrying wheels 11, arranged to roll on the flange shaped portions 12 of the beam situated on each side of the slit-formed opening 2 in the lower side of the beam 1, which portions thereby act as race tracks for these wheels.
Fig. 2b shows a cross section taken at a distance from the view according to Fig. 2a and here the threaded portion 5 is missing and the spindle 4 carries the centre profile 4a only, which is provided with external grooves and ridges, for giving a safe transfer of the spindle rotation to the threaded portions 5.

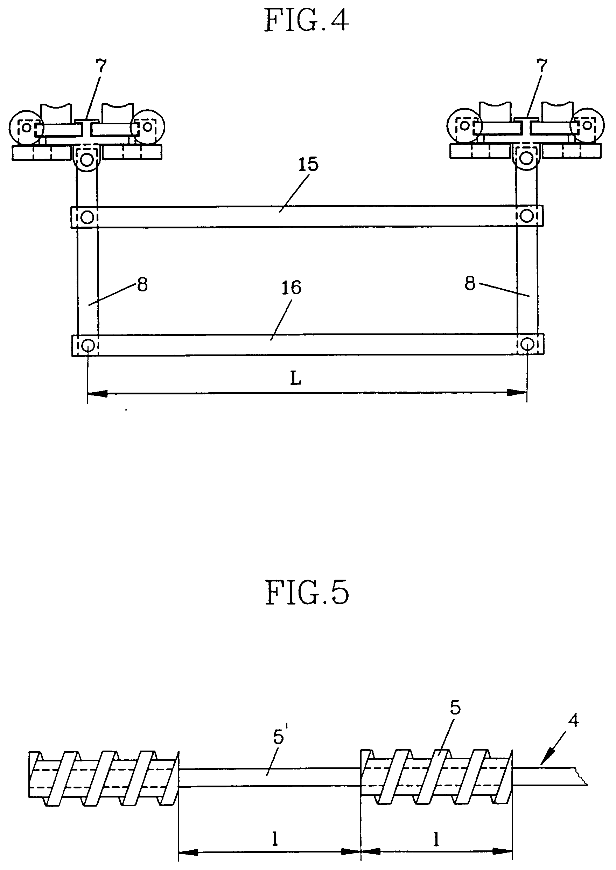

In Fig. 2c is shown in a corresponding cross section a portion where the spindle 4 is missing the centre profile, and which portion, as will be elucidated later on, occurs at a switching position. In Fig. 2a-c is only one of the two transverse shafts 10 of the trolley visible. From Fig. 3, which shows the movable trolley in side elevation, it is however clearly visible how the trolley 7 has two spaced apart transverse shafts 10 with wheels 11. Between the wheels 11 in the different pairs, there are arranged guiding means in the form of guide rollers 13 directed downwards and having a width somewhat smaller than the width of the slit-shaped opening 2 in the beam 1. These guide rollers 13, which project down through the opening, causes that the trolley 7, when driven by the spindle, is safely guided in longitudinal direction without tendencies of misalignment and locking due to the "drawer-effect". As can be seen from this view the arm 8 is journalled about a shaft 14, which is provided in a bracket 14a, and about which it can make pendulum motions when needed.

As can be seen from Fig. 4 two movable trolleys 7 are interconnected with a fixed mutual spacing L, which in the embodiment shown has been obtained in that between the arms 8 on each trolley are arranged articulately fitted connecting members 15, 16. In this manner the distance L between the two movable trolleys 7, which are interconnected to a unit, will always be the same, which is an important detail for the function of the conveyor, which will be evident from the following description.

In Fig. 5 is shown a portion of the spindle 4 incorporated in the conveyor device according to the invention, and as can be seen this spindle is equipped with alternating threaded portions 5, and nonthreaded, smooth portions, which are constituted by centre profile 4a or spindle 4. Each of the threaded portions 5 have a length l, somewhat exceeding the distance L between the movable trolleys 7 in the same unit, and preferably also each one of the nonthreaded portions 5' have a length l', which is substantially equal to the length l of the threaded portions. Hereby it should be noticed that the length l' may not be bigger than the length l, but it may however be shorter.

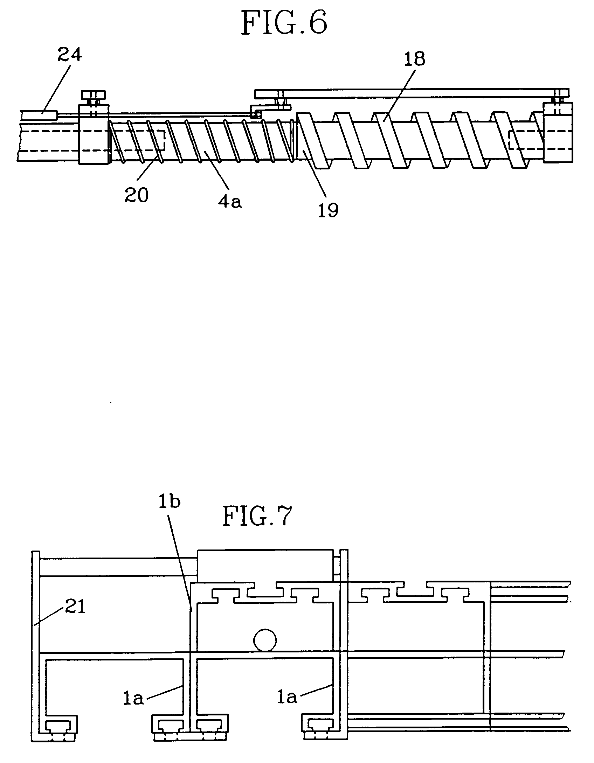

In Fig. 6 is shown in a partial side view a portion of the spindle 4 equipped with a threaded portion 18, which is made as a cylindrical sleeve 19, surrounding the spindle and being axially displaceable along the spindle, which sleeve externally is provided with a thread, intended to be able to transfer the rotational motion of the spindle to a motion driving the movable trolley. By means of a spring 20 or the like, the sleeve 19 is pretensioned in a direction towards operating position, but as stated above it can be displaced axially against the action of the spring 20 to a position where its distance to the next threaded portion is bigger or smaller than the distance l, and thereby other than the distance between two trolleys interconnected to a unit.

Fig. 7 shows finally schematically how a switching device for the conveyor device according to the invention can be accomplished in a simple and rational manner.

As the driving spindle 4 of the conveyor device is arranged to be situated in the upper half of the beam 1 above the trolleys propelled thereby, this beam in one portion can be split along a horizontal plane, whereby in this portion the lower beam part 1a is made double, thus that in a parallel steering is present two lower beam parts 1a,1a', one of which, e.g. 1a continues in the main direction of the upper beam part 1b, whereas the second lower part 1a' is curved laterally away from said main direction for the upper beam part 1b. By displacing the lower beam halves 1a, 1a' laterally it is thereby possible to switch in the trolleys rolling on the lower flanges of the lower beam half on (not shown) branch tracks, where the driving of the trolley is taken over by a (not shown) spindle, which extends in the curved longitudinal direction of the branched off lower beam part 1a'.

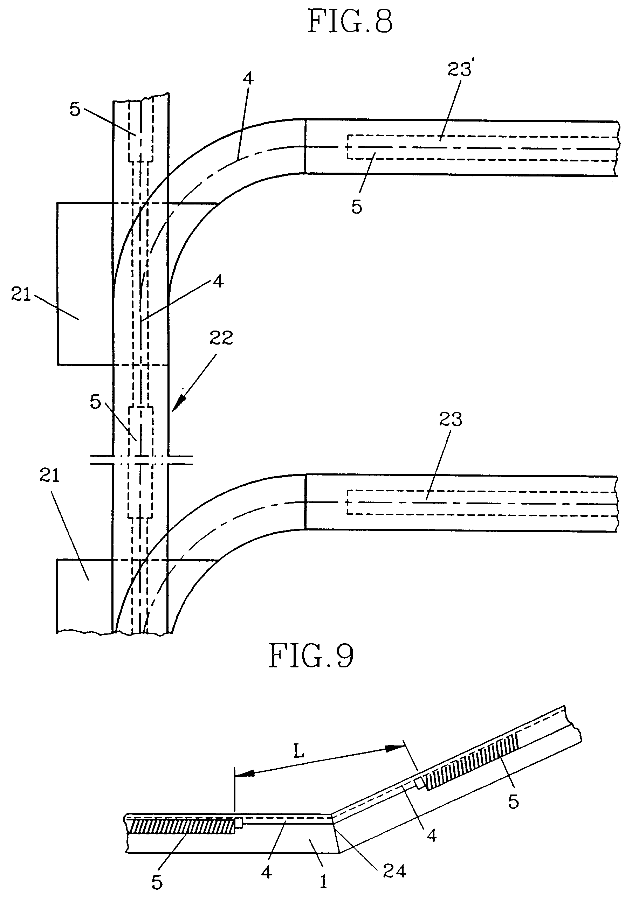

In Fig. 8 is shown in a schematic view from above a conveyor track for a conveyor according to the invention, whereby the track incorporates a substantially rectilinear track part 22, with two branched off side tracks 23, 23', each of which is provided with a switching device according to Fig. 7, which is generally designated 21. Along the main extension 22 the spindle in the main beam has threaded portions 5, whereas it in the area of the switching devices has smooth, non-threaded spindle portions 4, i.e. non-driven sections. Along the entire branched off, curved sections the spindle is non-driving, and the length of these non-driven curved sections correspond to the distance L. By means of this overhead spindle 4 with its alternating driving sections 5 and non-driving sections, it is possible with the configuration shown, to arrange the extension of the conveyor track also in rather sharp curves, at the same time as it hereby is possible with the switching device shown in Fig. 7 to carry through switching of a conveyor trolley unit incorporating two interconnected trolleys 7 to the right as well as to another branch track extending to the left in Fig. 7, at the same time as the trolley unit can be brought to travel on straight ahead.

In Fig. 9 is shown schematically how the conveyor track according to the invention can be angled upwards, in that the beam 1 somewhere along a nonthreaded portion 4 of the spindle, is provided with a bend, whereby the portions of the spindle, angled relative to each other, are interconnected by means of a ball joint 24 or the like. The length of the nonthreaded portion thereby at most is somewhat shorter than the distance between two interconnected movable trolleys. The same possibility for angling downwards and laterally can of course be obtained in similar manner.

The conveyor device according to the invention operates in the following manner:
When the spindle 4 arranged in the beam 1 is brought to rotate, by means of a not shown driving device in a manner known per se, the trolley 7 with its driving block 6, will be carried along by the spindle 4 by means of the thread in a threaded section 5. Thereby the forward trolley 7 of each unit, as seen in the direction of travel, will be carried along by the thread in a threaded section 5. Thereby the forward trolley 7 will be "pulled" forward, whereby the rear trolley will be situated along a nonthreaded, smooth section 5a. When the forward trolley thereupon just passes from the threaded section 5 to the smooth section 5', the rear trolley of the pair will just will enter the same threaded section 5, whereby the rear trolley and the forward trolley connected thereto as a unit will be "pushed" forward, until the rear trolley has reached the end of the said threaded section. However, at the same time as this occurs, the forward trolley has reached the next threaded section and will therefore be in driving thread engagement with this section, etcetera. As the distance L between the trolleys 7 in each unit substantially corresponds to the length l of the threaded section 5 and of the nonthreaded section 5', in this manner is obtained a continuous driving of the conveyor trolley unit along the entire extension of the conveyor track.

When switching from a track section to a branch section, the overhead spindle and the alternating threaded and non-threaded, i.e. driving and non-driving sections 5 and 4 resp., will enable the horizontally split beam at displacement of the lower portion 1a, to move the trolley 7 situated therein from its position under the first, straight beam part 1b, to the adjacent, curved beam part 1b', as the spindle 4 is not in driving engagement with the driving block 6 of the movable trolley in this section.

With the solution illustrated in Fig. 6, where the threaded portion 18 is movably arranged on the centre profile 4a of the spindle, against the action of a pressure spring 20, and where the threaded section can be moved by means of a force cylinder 24, merely intimated, it is possible to move the consecutive driving sections thus that the distance between them can be caused to be temporarily shorter or possibly longer than the distance between two consecutive interconnected trolleys. Hereby two consecutive, interconnected trolleys in this area simultaneously will be disengaged from driving, threaded sections, which means that such displacement of a thread-provided section 5, 18 can cause the unit consisting of two movable trolleys to stop along the track although the spindle is still rotating, which means that other trolley units during that time are moved in other areas of the conveyor track. In order to re-start the trolley unit thus halted, the power cylinder is simply relieved, thus that the threaded section by means of the spring is moved back to its normal driving position.

The invention is not limited to the embodiments shown in the drawings and described in connection thereto, but modifications and variations are possible within the scope of the following claims.

## Claims

1. A suspended conveyor device of the type incorporating trolleys (7) movable on a race track (12) and being propelled by a threaded spindle (4) arranged to rotate in the longitudinal direction of the race track, which spindle cooperates with driving blocks (6) provided at said trolleys (7),
**characterized therein**,
that the spindle (4) is equipped with alternating threaded, driving sections (5) and smooth, non-driving sections (4, 4a), and that said movable trolleys (7) are each constituted by two trolleys (7) interconnected to form a unit and having a mutual spacing (L), which substantially corresponds to the length (l) of said driving sections (5) of the spindle (4), whereby a unit comprising two trolleys (7) during propulsion is in driving engagement with driving sections (5) of the spindle (4) with at least one of its two trolleys (7) forming part of the unit.

2. A device as claimed in claim 1,
**characterized therein**,
that the spindle (4) is situated above the race track (12) and above the trolleys (7) movable thereupon.

3. A device as claimed in anyone of claims 1 or 2,
**characterized therein**,
that two interconnected trolleys (7) are each equipped with an arm (8) suspended below said race track (12), which arms together carry a loading area (9) interconnecting the two arms and thereby also the two trolleys (7) of a unit.

4. A device as claimed in anyone of the preceding claims,
**characterized therein**,
that the race track (12) is constituted by lower flanges in a box beam (1) at its bottom provided with a slit-formed groove (2), said trolleys (7) being movable in the interior of said box beam and with said spindle (4) arranged in the upper part of said box beam.

5. A device as claimed in claim 4,
**characterized therein**,
that the box beam (1) at least along a section is divided into a lower (1a) and an upper part (1b), whereby the spindle (4) is arranged in the upper part (1b), whereas race tracks (12) and movable trolley (7) are situated in the lower part (1a), and that this section is provided with a switching device (21) for switching the trolley (7) from a main extension (22) of the race track into a branched off track section (23, 23').

6. A device as claimed in claim 5,
**characterized therein**,
that the switching device (21) is constituted by a steering device arranged at a non-driven portion (4) of the spindle, and having two upper beam portions (1b,1b') arranged side by side, one of which has a straight extension, whereas the other is curved, and with two lower beam parts (1a,1a') arranged side by side and laterally displacable relative to the upper beam parts (1b,1b'), whereby mutual displacement of the upper and lower beam parts relative to each other can be obtained for switching to a side track (23,23'), in that the spindle (4) in this position is out of driving engagement with the trolleys.

7. A device as claimed in anyone of the preceding claims,
**characterized therein**,
that at least one of the threaded portions (18) of the spindle (4) is axially displaceable in the longitudinal direction of the spindle for causing the mutual distance between adjacent driving portions temporarily to exceed the distance between two trolleys (7) forming part of a trolley unit for allowing standstill for the trolley unit during rotation of the spindle.

## Patentansprüche

1. Vorrichtung für Hängeförderer des Typs mit integrierten Laufkatzen (7), bewegbar auf einer Laufbahn (12) und angetrieben durch eine Gewindespindel (4), die so angeordnet ist, daß sie in Längsrichtung der Laufbahn antreibt, wobei die Spindel mit an den Laufkatzen (7) vorgesehenen Antriebsblöcken (6) zusammenwirkt, dadurch gekennzeichnet, daß die Spindel (4) alternierend mit gewindetragenden Antriebs-Sektionen (5) und glatten, nicht-treibenden Sektionen (4, 4a) ausgestattet ist und daß die bewegbaren Laufkatzen (7) jeweils aus zwei miteinander zur Bildung einer Einheit verbundenen Katzen (7) bestehen und einen gegenseitigen Abstand (L) aufweisen, der im wesentlichen der Länge (l) der Antriebs-Sektionen (5) der Spindel (4) entspricht, wobei eine zwei Laufkatzen (7) umfassende Einheit während des Vortriebes mit mindestens einer der zwei Katzen (7), die Teil der Einheit sind, mit der Antriebs-Sektion (5) der Spindel (4) in Antriebs-Verbindung ist.

2. Vorrichtung nach Anspruch 1, dadurch gekennzeichnet, daß die Spindel oberhalb der Laufbahn (12) und oberhalb der darauf bewegbaren Katzen (7) angeordnet ist.

3. Vorrichtung nach einem der Ansprüche 1 oder 2, dadurch gekennzeichnet, daß zwei miteinander verbundene Katzen (7) jeweils mit einem unterhalb der Laufbahn (12) hängenden Arm (8) ausgestattet sind, die gemeinsam einen Lastbereich (9) tragen, der die beiden Arme und dadurch ebenso die beiden Katzen (7) der Einheit verbindet.

4. Vorrichtung nach einem der vorhergehenden Ansprüche, dadurch gekennzeichnet, daß die Laufbahn (12) aus unteren Flanschen in einem Kastenträger (1) gebildet ist, der an seiner Unterseite mit einer einen Schlitz bildenden Nut (2) versehen ist, wobei die Katzen (7) im Inneren des Kastenträgers mittels der im oberen Teil des Kastenträgers angeordneten Spindel (4) bewegbar sind.

5. Vorrichtung nach Anspruch 4, dadurch gekennzeichnet, daß der Kastenträger (1) mindestens entlang eines Abschnittes in einen unteren (1a) und einen oberen Teil (1b) geteilt ist, wobei die Spindel (4) im oberen Teil (1b) angeordnet ist und die Laufbahn (12) und bewegbaren Katzen (7) sich im unteren Teil (1a) befinden; dieser Abschnitt mit einer Weiche (21) versehen ist, um die Katzen (7) von einer Hauptstrecke (22) der Laufbahn in einen abgezweigten Bahnabschnitt (23, 23') zu rangieren.

6. Vorrichtung nach Anspruch 5, dadurch gekennzeichnet, daß die Weiche (21) durch eine an der nicht - antreibenden Sektion (4) der Spindel angeordneten Führungseinrichtung gebildet wird und zwei obere, Seite an Seite angeordnete, Trägerteile (16, 16') hat, von denen eines eine geradlinige Ausdehnung hat, während das andere gebogen ist, sowie zwei untere, Seite an Seite angeordnete, Trägerteile (1a, 1a'), wodurch ein gegenseitiger Versatz der oberen und unteren Trägerteile zueinander erzielt werden kann, um zu einer Seitenbahn (23, 23') zu rangieren, in dem die Spindel (4) sich in dieser Position außer Antriebs-Verbindung mit den Katzen verbindet.

7. Vorrichtung nach einem der vorhergehenden Ansprüche, dadurch gekennzeichnet, daß mindestens einer der Gewindeabschnitte (18) der Spindel (4) in Längsrichtung der Spindel axial versetzbar ist, damit der gegenseitige Abstand zwischen zwei benachbarten Antriebsabschnitten zeitweise den Abstand zwischen zwei Laufkatzen, die Teil einer Katzen - Einheit sind, überschreitet, um so einen Stillstand der Katzeneinheit während der Drehung der Spindel zu ermöglichen.

## Revendications

1. Dispositif de convoyeur suspendu du type comprenant des chariots (7) qui sont mobiles sur une piste (12) et qui sont déplacés par une tige filetée (4) montée pour tourner selon le sens longitudinal de la piste, qui coopère avec des blocs d'entraînement (6) montés sur lesdits chariots (7),
**caractérisé en ce que**
la tige (4) est équipée alternativement de sections filetées (5), qui entraînent, et de sections lisses (4, 4a), qui n'entraînent pas, et en ce que lesdits chariots (7) sont chacun constitués par deux chariots (7) reliés pour former une unité, avec un espace (L) entre eux correspondant à la longueur (l) desdites sections filetées (5) de la tige (4), de manière qu'une unité comprenant deux chariots (7) soit, pendant la propulsion, entraînée par les sections filetées (5) de la tige (4) par au moins un des deux chariots (7) qui fait partie de l'unité.

2. Dispositif suivant la revendication 1,
**caractérisé en ce que**
la tige (4) est située au-dessus de la piste (12) et au-dessus des chariots (7) qui sont y mobiles.

3. Dispositif suivant la revendication 1 ou 2,
**caractérisé en ce que**
deux chariots (7) reliés sont chacun équipés d'un bras (8) suspendu au-dessous de ladite piste (12), les bras supportant ensemble une surface de charge (9) qui les relie, ainsi que les deux chariots (7) d'une unité.

4. Dispositif suivant l'une quelconque des revendications précédentes,
**caractérisé en ce que**
la piste (12) est constituée de rebords inférieurs dans une poutre-caisson (1) dont le fond présente une rainure (2) en forme de fente, lesdits chariots (7) étant mobiles à l'intérieur de ladite poutre-caisson et ladite tige (4) étant prévue dans la partie supérieure de ladite poutre-caisson.

5. Dispositif suivant la revendication 4,
**caractérisé en ce que**
la poutre-caisson (1), au moins le long d'une section, est divisée en une partie inférieure (1a) et une partie supérieure (1b) de manière que la tige (4) soit dans la partie supérieure (1b) tandis que la piste (12) et les chariots (7) sont dans la partie inférieure (1a), et en ce que cette section est pourvue d'un dispositif de commutation (21) pour faire passer le chariot (7) d'un prolongement principal (22) de la piste à une section de rail dérivée (23, 23').

6. Dispositif suivant la revendication 5,
**caractérisé en ce que**
le dispositif de commutation (21) est constitué par un dispositif d'aiguillage prévu sur une section (4) de la tige, qui n'entraîne pas, avec deux portions supérieures de poutre (1b, 1b'), qui sont côte à côte, dont l'une est droite tandis que l'autre est courbe, et deux parties inférieures de poutre (1a, 1a'), qui sont côte à côte et déplaçables latéralement par rapport aux parties supérieures de poutre (1b, 1b'), de manière que le déplacement mutuel des parties supérieures et inférieures de poutre, l'une par rapport à l'autre, puisse être obtenu pour faire passer vers un rail latéral (23, 23'), en ce que la tige (4), dans cette position, n'entraîne pas les chariots.

7. Dispositif suivant l'une quelconque des revendications précédentes,
**caractérisé en ce que**
au moins une des portions filetées (18) de la tige (4) est déplaçable axialement dans son sens longitudinal pour que la distance mutuelle entre des portions voisines d'entraînement dépasse temporairement la distance entre deux chariots (7) qui font partie d'une unité de chariots afin de permettre l'arrêt de l'unité de chariots pendant la rotation de la tige.
